# EUROPEAN PATENT APPLICATION

(11) **EP 4 651 025 A1**
(43) Date of publication of application: **19.11.2025**
(21) Application number: 25176105.2
(22) Date of filing: 13.05.2025
(51) Int. Cl.: G06N 3/0442, G06N 3/09, B62D 6/00

(54) **ZERO-PHASE FILTERING SYSTEM FOR AUTOMOTIVE APPLICATIONS AND CORRESPONDING METHOD**

(30) Priority: 16.05.2024 IT 202400011116
(71) Applicant: FERRARI S.p.A., 41100 Modena (IT)
(72) Inventor: FLUMERI, Alessandro, 41100 MODENA (IT); COSTI, Giordano, 41100 MODENA (IT)
(74) Representative: Studio Torta S.p.A.

(57) **Abstract**

A filtering system (20) is described for automotive application, designed to implement filtering of a raw detection signal (*S_{d}*) provided by a sensor (11) installed on board a motor vehicle (1). The system envisages a neural network stage (22) configured to receive, as an input, the raw detection signal (*S_{d}*) and to implement a neural network architecture trained to generate, in real time and as a function of the raw detection signal (*S_{d}*), a filtered detection signal (*S̅_̅{̅d̅}̅*) with a zero-phase filtering.

## Description

### CROSS-REFERENCE TO RELATED APPLICATIONS

This patent application claims priority from Italian patent application no. 102024000011116 filed on May 16, 2024, the entire disclosure of which is incorporated herein by reference.

### TECHNICAL FIELD

The present solution relates to a zero-phase filtering system for automotive applications and to a corresponding method.

Latest motor vehicles are equipped with increasingly complex control systems, for example for advanced assisted driving systems to implement increasingly complex levels of autonomous driving (at increasing levels of automation, as, for example, codified by the SAE - Society of Automotive Engineers - international classification).

As is known, these control systems base their operation on real-time detection of multiple quantities associated with motor vehicle operation, such as speed, acceleration, steering angles, operating temperatures and pressures, and so on.

These quantities are detected by multiple sensors on board the motor vehicles, which provide raw signals that are then subjected to digital processing, for example amplification and filtering, in order to make them available for processing by a motor vehicle control unit (usually known as ECU - Electronic Control Unit).

In particular, it is known that digital (low-pass, highpass or band-pass) filtering operations performed in real time involve some phase distortion or at least a time delay (in the case of linear phase filters).

Such delays may cause problems in implementing the above-mentioned control systems (making the same systems unusable in the most extreme cases where the latency introduced is unacceptable for the required functionality), or in any case have to be appropriately considered by the control systems.

Currently, the possibility of implementing zero-phase digital filters (that is, without phase distortion), due to the resulting non-random nature of filtering, is only possible in post-processing of previously acquired data, that is, it is not available in real (or near-real) time, during actual motor vehicle operation.

For example, zero-phase filtering of previously stored data (that is, for which an entire time sequence of acquired samples of the raw digital signal is available) can be implemented using non-random filters, which normally cannot be implemented in real-time as they require information about the future for their operation.

### OBJECT OF THE INVENTION

The aim of the present disclosure is in general to provide a solution that allows "zero-phase" filtering (that is, a filtering substantially free of phase distortion or delay) to be performed in real (or near-real) time, without the need for post-processing of stored data, being implemented in particular for automotive control applications.

In accordance with the aim indicated above, according to the present solution a system and a method, as defined in the attached claims, are provided.

### BRIEF DESCRIPTION OF THE DRAWINGS

The present invention will now be described with reference to the accompanying drawings, which illustrate a non-limiting embodiment thereof, wherein:
- Figure 1 schematically shows a motor vehicle provided with at least one control system operating in real time;
- Figure 2 shows a schematic block diagram of the control system;
- Figure 3 shows a schematic block diagram of a zero-phase filtering system according to one aspect of the present solution;
- Figure 4 shows a detailed block diagram of a neural network stage in the filtering system of Figure 3;
- Figure 5 shows a graph relating to a training procedure in the neural network stage;
- Figures 6A and 6B show plots of quantities indicative of the performance of the filtering system;
- Figure 7 schematically shows a possible automotive application of the filtering system; and
- Figures 8, 9A and 9B show plots of quantities associated with the operation of the filtering system in relation to the application shown in Figure 7.

### DETAILED DESCRIPTION OF THE EMBODIMENTS

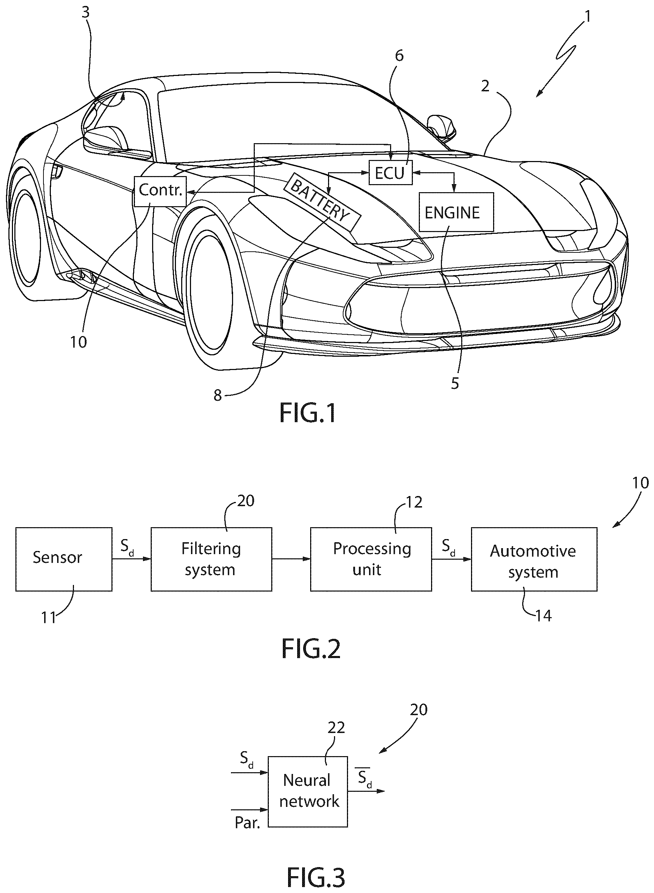

In Figure 1, reference number 1 denotes, as a whole, a motor vehicle comprising a body 2 defining a passenger compartment 3 and housing a drive unit 5, being of the thermal, hybrid or electric type, the operation of which is controlled by an electronic control unit 6 (ECU), which also monitors general operation of the motor vehicle 1.

The motor vehicle 1 comprises, in a manner schematically illustrated in Figure 1, a battery 8 and at least one control system, indicated with 10, configured to control an automotive system in the same motor vehicle 1, for example an Adaptive Cruise Control system (ACC), an Anti-lock Braking System (ABS), a Traction Control System (TCS), a stability control system (ESP/ESC, Electronic Stability Program/ Electronic Stability Control), or similar.

In general, the motor vehicle 1 may be equipped with multiple such control systems 10 to manage its operation and to assist the driver of the motor vehicle 1 with the driving functions.

In addition, the above-mentioned control system 10 can be implemented, at least in part, by the electronic control unit 6 of the motor vehicle 1.

As schematically depicted in Figure 2, the control system 10 comprises at least one sensor 11, arranged on board the motor vehicle 1, configured to detect a quantity of interest for the control actions (for example, a speed, an acceleration, an angular position, a temperature, a pressure, etc.) and to generate a raw detection signal *S_{d}*, indicative of the same quantity.

The control system 10 also comprises a processing unit 12, provided with a microprocessor, microcontroller or similar digital processing unit, configured to implement a suitable control logic for the above-mentioned automotive system, indicated with 14.

The control logic is implemented by an appropriate software algorithm executed by the processing unit 12 and stored, in the form of programming code, in a non-volatile memory (not shown here) coupled to the processing unit 12.

As indicated above, the processing unit 12 of the control system 10, although shown here schematically separate from the electronic control unit 6 of the motor vehicle 1, may coincide with, or be part of, the electronic control unit 6.

The control system 10 also comprises, arranged between the sensor 11 and the processing unit 12, a filtering system 20, configured to receive, as an input, the raw detection signal *S_{d}* and generate, as an output, a filtered detection signal *S̅_̅{̅d̅}̅*, by means of suitable filtering operation, for example of the low-pass type (or, alternatively, of the highpass or band-pass type, depending on the requirements of the control system 10 and the type of detection signal).

The above-mentioned processing unit 12 is configured to receive, as an input, the above-mentioned filtered detection signal *S̅_̅{̅d̅}̅* and to implement the above-mentioned control logic of the automotive system 14 according to the same filtered detection signal *S̅_̅{̅d̅}̅*.

In particular, according to one aspect of the present solution, the filtering system 20 is configured to implement a real-time (or near-real time, generally meaning data processing at a near-instantaneous rate, requiring a constant flow of data input and data output in order to constantly benefit from real-time information) and essentially zero-phase filtering of the raw detection signal *S_{d}*, using a suitably trained neural network.

As an example, such filtering can be a low-pass filtering with a cut-off frequency between 0 and 5 Hz (this kind of filtering being commonly used for the control of the above-mentioned automotive systems 14).

As shown schematically in Figure 3, the filtering system 20 generally comprises a neural network stage 22, which receives, as an input, the above-mentioned raw detection signal *S_{d}* provided by the sensor 11.

In a possible embodiment, shown in the same Figure 3, the neural network stage 22 may additionally receive, as an input, one or more further parameters (or characteristics) of the detection signal, which may be calculated in real time by one or more respective digital calculation modules (not illustrated here and of a known type).

The neural network stage 22 is configured to implement a neural network architecture, suitably trained to generate the filtered detection signal *S̅_̅{̅d̅}̅* as a function of the raw detection signal *S_{d}* and the above-mentioned one or more possible further parameters of the detection signal.

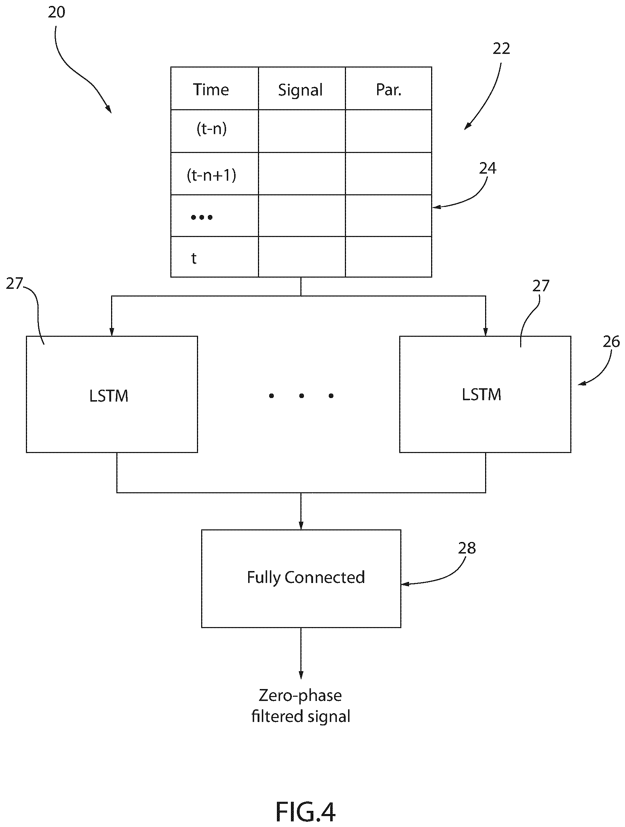

More specifically, and referring to Figure 4, the neural network architecture implemented by the neural network stage 22 comprises an input layer 24, defining a data buffer designed to store (with a movable time window continuously updated over time) a certain number n of past time samples of the raw detection signal *S_{d}* (from *t-n* to *t-1*) as well as a current sample (t) of the same raw detection signal *S_{d}*.

The number of samples maintained, updated over time, in this data buffer depends on the specific application of the control system 10.

For example, the data buffer can maintain 100 samples; assuming the raw detection signal *S_{d}* is sampled at a frequency of 100 Hz, this number of samples therefore corresponds to a time window of 1 s.

In general, the length of the data buffer can range from one sample (lower limit case) to a number of samples corresponding to a time window lasting no longer than 10 s, typically being equal to 2-3 s (the time window thus has a duration between 0, or a minimum value of, for example, 0.1 s, or 100 milliseconds, and a maximum value of, for example, 10 s).

As shown in Figure 4, the data buffer of the input layer 24 may also store, in association with each time sample, the value of one or more characteristic parameters of the raw detection signal *S_{d}*.

For example, these characteristic parameters may comprise the original frequency value of the raw detection signal *S_{d}*, or a delta (that is, an incremental difference or step) between amplitude values of samples of the past window, specifically between each sample and the previous one. Other parameters that can be calculated (over time windows in the past) are the moving average value and the autocorrelation value.

The above-mentioned neural network architecture further comprises at least one intermediate layer 26 formed from multiple neural network blocks (or neurons) 27, each coupled to the above-mentioned data buffer of the input layer 24.

According to one aspect of the present solution, such neural network blocks 27 are recursive, in a possible implementation of the LSTM (Long-Short Term Memory) type, each neuron thus being configured to generate a new output after evaluating the current input along with the output and the previous memory.

The number of neurons or neural network blocks 27 in each intermediate layer 26 and the number of intermediate layers 26 depends on the specific application of the control system 10.

The number of intermediate layers 26 is typically between 1 and 10, for example 5; in addition, the maximum number of neurons in each intermediate layer 26 is, for example, equal to 64, typically being no more than 128 (the number of neurons being thus typically between 1 and 128).

The neural network architecture also comprises a final layer 28, which defines the output value of the neural network, corresponding to the current sample (at time t) of the filtered detection signal *S̅_̅{̅d̅}̅*.

In one possible embodiment, this final layer 28 is of the fully connected type, receives the outputs of all the neural network blocks 27 of the intermediate layer 26 (or of the last of the intermediate layers 26, if there are several intermediate layers 26) and provides the above-mentioned output value as a function of the outputs of the neural network blocks 27.

The number of trainable parameters (for example, associated with weight values that can be assigned to the various connections in the neural network) of the above-mentioned neural architecture clearly depends on the number of intermediate layers 26, the number of neurons in the same intermediate layers 26 and the characteristics of each neuron.

The neural network implemented in the filtering system 20 is trained prior to the use of the filtering system 20 in the control system 10 of the automotive system 14.

In particular, a suitable training signal is used for training purposes, which is filtered in post-processing (having available all samples of the same training signal) by means of a zero-phase digital filter (of a known type, for example obtained by means of Matlab's "filtfilt" function).

During training, the parameters of the neural network are automatically modified and thus "learned" by the network, iteratively, so as to minimise an error between the filtered signal provided by the neural network and the respective filtered signal provided by the digital filter operating in post-processing.

The above-mentioned training signal can be a signal affected by artificially generated noise (so-called synthetic signal), for example from a cosine function with a continuously variable frequency in a certain range of values, for example between 0 and 10 Hz.

A part of the training signal, that is a certain number of samples, which in the above example can be related to frequency windows centred around, for example, 2 Hz and 7 Hz, can be used for testing or validating the neural network (thus being excluded from training).

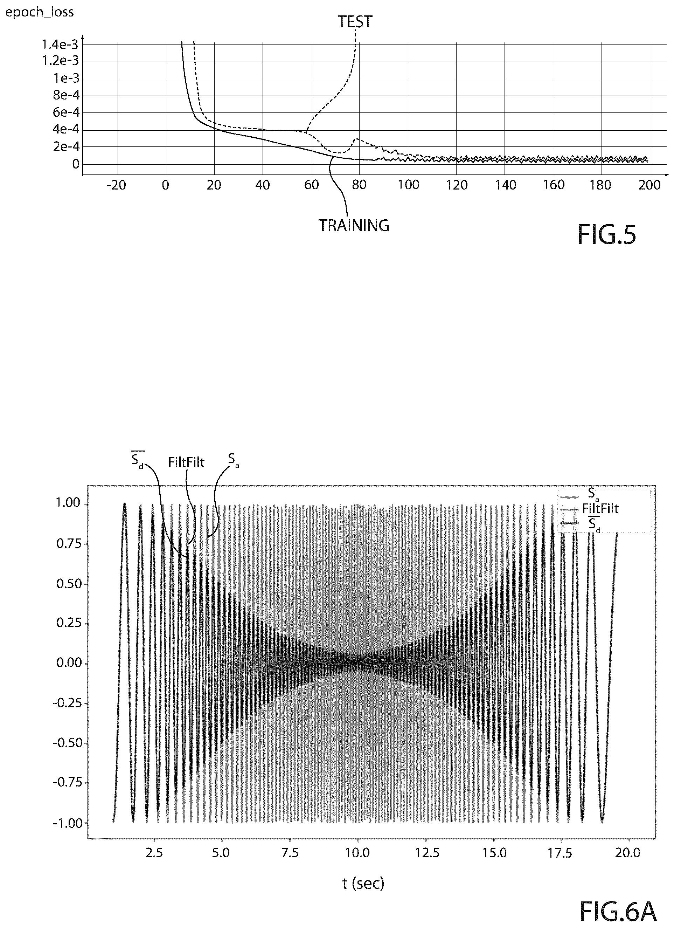

In this respect, Figure 5 shows a possible performance of the training procedure, considering the above example of a synthetic or artificially generated signal. As can be seen from the plot of the epoch loss function, it is possible to obtain optimal training for the neural network, in the example, from the 120th epoch onwards.

Figure 6A shows the overall trend of the filtered detection signal *S̅_̅{̅d̅}̅* coming from the filtering system 20 (once the training of the neural network has been completed), compared with the artificially generated signal, indicated with *Sₐ*, and with the signal filtered in post-processing by means of a zero-phase digital filter (indicated with *FiltFilt* in Figure 6A).

These plots relate to an example of a second-order, low-pass filter (with Butterworth response), with a cut-off frequency of 5 Hz.

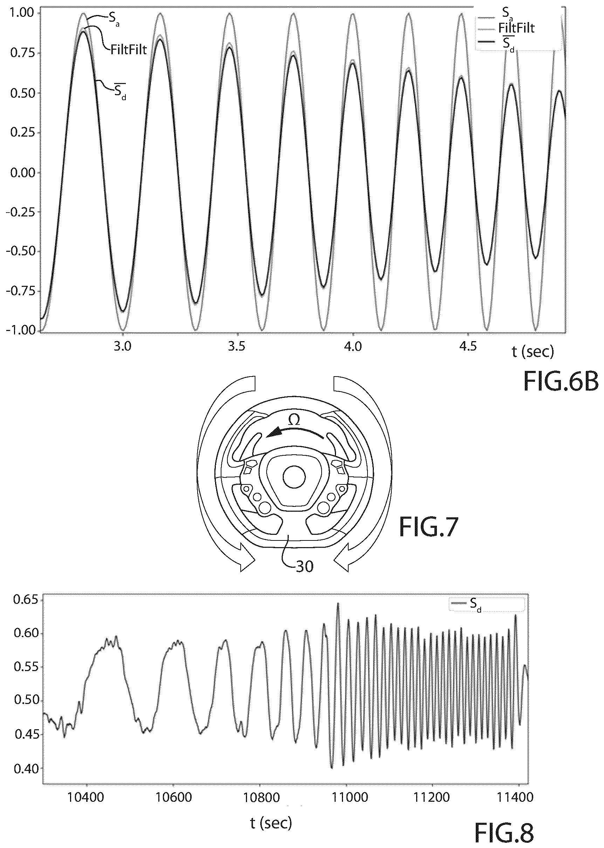

Figure 6B shows an enlargement of the above signal trend, representing the zero-phase filtering operation.

In general, an examination of the above plots shows an excellent performance of the filtering system 20, with the trend of the filtered detection signal *S̅_̅{̅d̅}̅* substantially matching the respective trend of the filtered signal *FiltFilt,* in particular having basically zero delay compared to the artificially generated signal *Sₐ*.

By way of example, a possible exemplary application of the filtering system 20 is now described, applied to a real detection signal provided by a sensor 11 installed on board the motor vehicle 1, in particular a steering angle position sensor of the motor vehicle 1.

As schematically shown in Figure 7, such an angular position sensor provides a raw detection signal *S_{d}* that is in this case indicative of an angular position Ω of the steering wheel 30 of the motor vehicle 1 about an axis of rotation orthogonal to the main extension plane of the steering wheel 30 (that is, indicative of the so-called steering angle).

In this example, the filtering system 20 is suitably configured and trained to implement a first-order, low-pass filtering (with Butterworth response) of the raw detection signal *S_{d}*, with a cut-off frequency of 2 Hz.

Figure 8 shows the raw detection signal *S_{d}*, acquired by the above-mentioned sensor 11, in the case of consecutive complete rotations of the steering wheel 30, in one direction and in the opposite direction, performed at variable speeds; in particular, the signal corresponds to the position in terms of absolute angle from 0 to 360 degrees and beyond (if the steering wheel is turned for more than one revolution), normalised between 0 and 1.

In this application example, the neural network architecture implemented by the neural network stage 22 of the filtering system 20 provides for a data buffer in the input layer 24 containing 50 samples (corresponding to a time window in the past of 0.5 seconds, given the sampling frequency of 100 Hz); the same data buffer 50 also stores, in addition to the samples of the raw detection signal *S_{d}*, the above-mentioned difference or delta between the sample values.

The neural network architecture in this case comprises a single intermediate layer 26 made up of 8 LSTM-type neural network blocks 27, each with 44 parameters (for a total of 352 trainable parameters of the above intermediate layer 26) .

The final layer 28 of the fully connected neural network architecture in this case has 9 parameters, for a total number of trainable neural network parameters of 361.

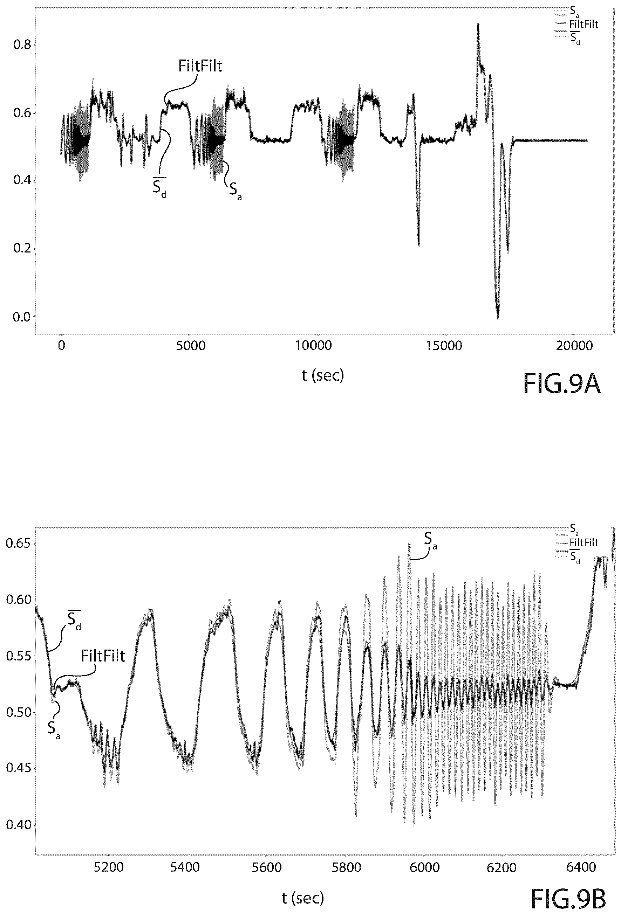

Figure 9A shows the overall trend of the filtered detection signal *S̅_̅{̅d̅}̅* coming from the filtering system 20 compared with the raw detection signal *S_{d}* and with the signal filtered in post-processing by means of a zero-phase digital filter (again indicated with *FiltFilt* in Figure 9A).

Figure 9B shows an enlargement of the above signal trend, representing the zero-phase, low-pass filtering operation.

In general, an examination of the above plots denotes the excellent performance of the filtering system 20, with the trend of the filtered detection signal *S̅_̅{̅d̅}̅* substantially matching the respective trend of the signal filtered in post-processing *FiltFilt,* in particular having basically zero delay compared to the raw detection signal *S_{d}*.

The advantages that the present solution allows to achieve are clear from what has been discussed.

In particular, the described solution provides an essentially zero-phase filtering system that can be executed in real or near-real time (and thus not in post-processing of previously acquired data).

This filtering system can be advantageously implemented in an automotive control system for real-time control of at least one corresponding automotive system.

The solution described is also simple and inexpensive to implement, as it does not generally require modifications to the hardware of the motor vehicle 1.

Lastly, it is clear that modifications and variations may be made to that described herein without departing from the scope of the present invention, as set forth in the claims.

In particular, different types of neurons, or neural network blocks 27, can be provided in the neural network architecture implemented by the neural network stage 22 of the filtering system 20. For instance, further types of recursive networks could be implemented, such as convolutional neural networks, "fully connected" neural networks or "Transformers" neural networks.

Furthermore, as mentioned above, different numbers of intermediate layers 26 can be provided in the neural network architecture and/or different numbers of neural network blocks 27 in each of the same intermediate layers 26.

In addition, different and/or additional parameters may be used in the data buffer of the input layer 24, associated with the samples of the raw detection signal *S_{d}*.

With regard to the training mode of the neural network stage 22, real detection signals, acquired by bench tests or during the actual use of the motor vehicle 1, could also be used, instead of synthetic, artificially generated signals.

In addition, it is underlined that training of the neural network may advantageously also be performed in a repeated manner during the life cycle of the motor vehicle 1 (for example, by the electronic control unit 6 of the motor vehicle 1), that is, also during the actual use of the filtering system 20 on board the motor vehicle 1, for example at regular intervals or when it is determined that the neural network requires an additional training.

## Claims

1. A filtering system (20) for automotive application, configured to implement filtering of a raw detection signal (*S_{d}*) provided by a sensor (11) designed to be installed on board a motor vehicle (1),
**characterized by** comprising a neural network stage (22) configured to receive, as an input, said raw detection signal (*S_{d}*) and to implement a neural network architecture configured to generate, in real time and as a function of the raw detection signal (*S_{d}*), a filtered detection signal (*S̅_̅{̅d̅}̅*) with a zero-phase filtering.

2. The filtering system according to claim 1, wherein said neural network stage (22) is configured to further receive, as an input, one or more further parameters of the raw detection signal (*S_{d}*) calculated in real time; and wherein said neural network architecture is configured to generate said filtered detection signal (*S̅_̅{̅d̅}̅*) also as a function of said one or more further parameters.

3. The filtering system according to claim 2, wherein said one or more further parameters comprise one or more of: a frequency of said raw detection signal (*S_{d}*); and a difference (Δ) between past samples of said raw detection signal (*S_{d}*)*.*

4. The filtering system according to any one of the preceding claims, wherein said neural network architecture comprises:
an input layer (24) defining a data buffer configured to store a number (n) of time samples of the raw detection signal (*S_{d}*);
at least one intermediate layer (26) formed by a plurality of neural network blocks (27), each coupled to said data buffer of the input layer (24); and
a final layer (28), which defines an output of the neural network corresponding to a current sample of the filtered detection signal (*S̅_̅{̅d̅}̅*).

5. The filtering system according to claim 4, wherein said neural network blocks (27) are of the recursive type, in particular of the LSTM, Long-Short Term Memory type.

6. The filtering system according to claim 4 or 5, wherein said final layer (28) is a layer of the fully connected type, designed to receive the outputs of all neural network blocks (27) of said at least one intermediate layer (26).

7. The filtering system according to any one of claims 4-6, wherein the number of intermediate layers (26) ranges from 1 to 10; and the number of neural network blocks (27) in each intermediate layer (26) ranges from 1 to 128.

8. The filtering system according to any one of claims 4-7, wherein said data buffer is designed to store, with a moving time window continuously updated over time, said time samples of the raw detection signal (*S̅_̅{̅d̅}̅*); wherein a duration of said time window ranges from 0 to 10 s.

9. The filtering system according to any one of the preceding claims, wherein said neural network architecture is trained and validated starting from a training signal, which is filtered in post-processing by means of a zero-phase digital filter.

10. A control system (10) for controlling an automotive system (14) in a motor vehicle (1), comprising:
at least one sensor on board the motor vehicle (1) and configured to detect a quantity of interest for the control and to generate a raw detection signal (*S_{d}*) indicative of said quantity; and
a processing unit (12) configured to implement a control logic of said automotive system (14),
**characterized by** comprising the filtering system (20) according to any one of the preceding claims, configured to generate, in real time and as a function of the raw detection signal (*S_{d}*), a filtered detection signal (*S̅_̅{̅d̅}̅*) with a zero-phase filtering; wherein said processing unit (12) is configured to implement said control logic as a function of said filtered detection signal (*S̅_̅{̅d̅}̅*).

11. A motor vehicle (1) comprising the control system (10) according to claim 10.

12. A filtering method for automotive application, comprising the step of filtering a raw detection signal (*S_{d}*) provided by a sensor (11) designed to be installed on board a motor vehicle (1),
**characterized by** comprising implementing a neural network architecture configured to generate, in real time and as a function of the raw detection signal (*S_{d}*), a filtered detection signal (*S̅_̅{̅d̅}̅*) with a zero-phase filtering.

13. The method according to claim 12, wherein said neural network is configured to further receive, as an input, one or more further parameters of the raw detection signal (*S_{d}*) calculated in real time; and is configured to generate said filtered detection signal (*S̅_̅{̅d̅}̅*) also as a function of said one or more further parameters.

14. The method according to claim 13, wherein said one or more further parameters comprise one or more of: a frequency of said raw detection signal (*S_{d}*); and a difference (Δ) between past samples of said raw detection signal (*S_{d}*).

15. The method according to claim 13 or 14, comprising training and validating said neural network starting from a training signal, which is filtered in post-processing by means of a zero-phase digital filter.
